**Europäisches Patentamt**

**European Patent Office**

**Office européen des brevets**

⑩

(11) Publication number: **0 117 945**
**B1**

(12) **EUROPEAN PATENT SPECIFICATION**

(45) Date of publication of patent specification: **07.02.90**

(21) Application number: **83307169.9**

(22) Date of filing: **24.11.83**

(51) Int. Cl.⁵: **F 16 H 3/52**

(54) Vehicles incorporating a final drive reduction unit.

(30) Priority: **09.12.82 EP 82306564**

(43) Date of publication of application:
**12.09.84 Bulletin 84/37**

(45) Publication of the grant of the patent:
**07.02.90 Bulletin 90/06**

(84) Designated Contracting States:
**AT BE DE FR GB IT NL SE**

(56) References cited:
**EP-B- 111 037**
**DE-A-1 904 831**
**FR-A- 494 697**
**FR-A-2 357 395**
**US-A-1 334 493**
**US-A-1 366 325**
**US-A-1 372 867**
**US-A-1 442 795**
**US-A-2 751 798**

(73) Proprietor: **DEERE & COMPANY**
**1 John Deere Road**
**Moline Illinois 61265 (US)**

(72) Inventor: **Saemann, Karl**
**Am Rosensteiner Hang 11**
**D-6720 Speyer (DE)**
Inventor: **Weiss, Heinz**
**Volkerstrasse 24**
**D-6140 Bensheim (DE)**

(74) Representative: **Pears, David Ashley**
**REDDIE & GROSE 16 Theobalds Road**
**London WC1X 8PL (GB)**

**Description**

The present invention is concerned with a range of vehicles as set forth in the introductory part of claim 1 and known from US—A—1 366 325. A transmission with a gearbox and two final drive reduction units transmitting power from the gearbox to a pair of road wheels may be referred to as a transaxle. Naturally the transmission will incorporate a clutch or clutches (which may be integrated into the gearbox) and a differential (which may also be integrated into the gearbox) but the invention is not concerned with these elements.

US—A—1 366 325 discloses a range of vehicles with final drive reduction units fitted in the drive wheels and whose ratios may be varied to match the diameters of the wheels. Moreover US—A—2 751 798 discloses a range of transmissions wherein the gearbox is driven through an equalizing gear, again merely to compensate the wheel diameters.

The invention is particularly concerned with agricultural and construction vehicles in which the load on the transmission is severe and in which it is common to provide a range of vehicles of different sizes and correspondingly different powers. A range of vehicles requires not only a range of engines but a range of transmissions adapted to the different powers and to different road wheel diameters, for example. The present application claims priority from our prior application No. 82306564.4 (published as EP—A,B—0 111 037), which is concerned with the problem of providing a transmission such that the gearbox itself can serve a range of vehicles, especially when the powers of the range of vehicles span a 2-to-1 range or even a greater range. For example, the lowest and highest power vehicles may have powers of 50 kW and 100 kW respectively, or 30 kW and 60 kW respectively or 60 kW and 120 kW respectively.

As explained in the prior application, a step-up or step-down gear adapts the engine torque to the gearbox design torque, and may therefore be called an equalizing gear. In a range of vehicles there may be one vehicle which has no equalizing gear although, as in the example to be described in detail below, all vehicles may have an equalizing gear. At least the largest or most powerful vehicle in the range will have a step-up equalizing gear since it will only be possible to transmit enough power through the gearbox by running it faster. This follows from the equation:

$$P = T.w = T.2\pi n \tag{1}$$

P = power
T = torque
w = angular velocity
n = speed in revolutions per second

Overspeeding the gearbox will result in increased wear but wear is directly proportional to speed whereas it is proportional to the third power of torque. Thus a 10% increase in speed reduces the life of the gearbox by around 10% whereas a 10% increase in torque would reduce the life by 25%. Thus it is acceptable to get increased power through the gearbox by speeding it up but not by overloading it (increasing torque). The reduction in life caused by speeding up is acceptable because of the major decrease in construction costs.

Application of the principle explained above leads to a requirement for high step-down ratios in the final drive reduction units which can be referred to more briefly as axle gears.

The object of the present invention is to provide a range of vehicles adapted to these requirements and with final drive reduction units which are constructionally similar. The range of vehicles according to the invention is defined in claim 1 below.

It may be found possible to construct the smallest vehicle of a range with a single stage axle gear.

The invention will now be described in more detail, by way of example, with reference to the accompanying drawings, in which:

Fig. 1 is a schematic plan view of a first transmission incorporating axle gears,

Fig. 2 is a less detailed schematic plan view of a second transmission incorporating axle gears,

Fig. 3 is a schematic elevation of a preferred axle gear,

Fig. 4 is a view like Fig. 3 showing a modified form of the axle gear for a higher power vehicle in a range, and

Fig. 5 is a view similar to Fig. 3 showing the use of the axle gear on a steering axle.

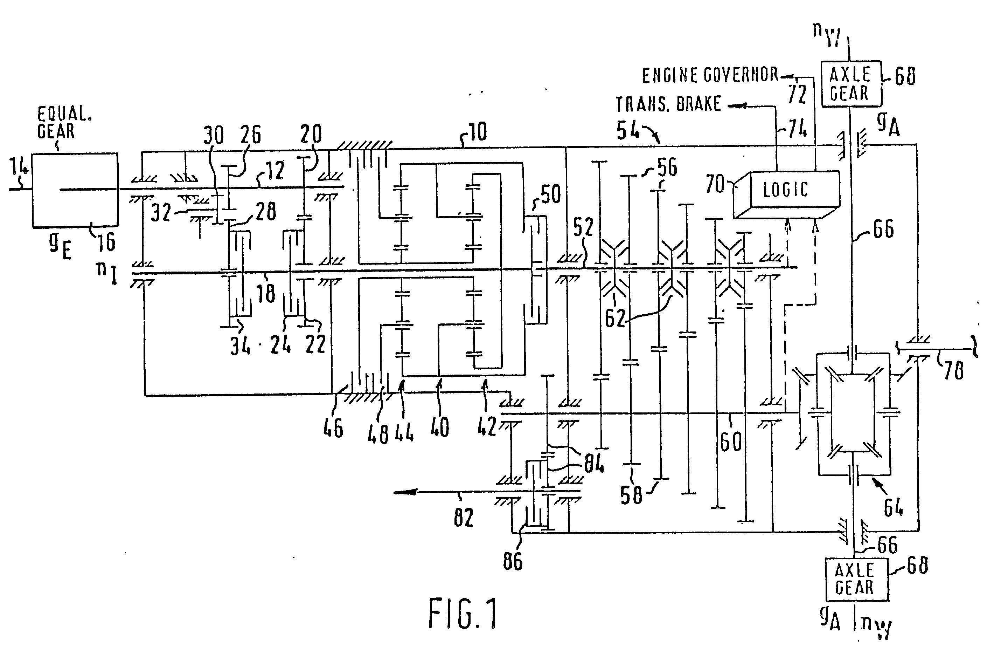

Referring to Fig. 1, a main gearbox 10 has an input shaft 12 which is not driven directly by the engine; rather the engine shaft 14 is coupled to the input shaft 12 through an equalizing gear 16 which has a fixed ratio, as explained below and which may consist of two spur gears or an epicyclic gear, for example. Although shown as a separate unit, it is within the scope of the invention to incorporate the equalizing gear 16 in the gearbox 10. The latter will be essentially the same from vehicle to vehicle but will, for example, have different size spur gears keyed on the shafts 14 and 12 in input chamber of the gearbox housing.

Another possibility is to incorporate the equalizing gear between the input shaft 12 and a second shaft 18 coupled by spur gears 20, 22 and a forward clutch 24 and also coupled by spur gears 26, 28, 30 (the gear 30 being a reversing gear on a countershaft 32) and a reverse clutch 34. The clutches 24 and 34 are the main clutches engageable under load. The equalizing gear can be constructed by choosing the correct number of teeth for the gears 20, 22, 26, 28 and 30.

The second shaft 18 is the input shaft to a range gear 40 comprising two epicyclic gears 42 and 44 with corresponding brakes 46 and 48 and a direct drive clutch 50 to the input shaft 52 of a change-speed gear 54. The gear 54 is a six-speed constant mesh, synchromesh gear with input gears 56 loose on the shaft 52 and output gears 58 rotationally fast with an output shaft 60. Synchronised dog clutch coupling sleeves 62 allow any input gear 56 to be clutched to the input shaft 52. The output shaft 60 drives a conventional bevel gear differential 64 with left and right output half shafts 66. The shafts 66 drive a pair of wheels of a tractor by way of respective axle gears 68, the construction of which will be described in more detail below.

The particular form of the gearbox 10 forms no part of the present invention. The gearbox illustrated in Fig. 1 has been described as a typical example of a gearbox for an agricultural tractor, with which the invention may be employed. The range gear 40 (three speeds) and the change-speed gear 54 (six speeds) provide a total of 18 speeds in forward or reverse, depending upon which of the clutches 24 and 34 is engaged. Additional features of the gearbox may be mentioned briefly. Firstly, synchronisation can be assisted by a logic circuit 70 which responds to the relative speeds of the change-speed gear input and output shafts 52 and 60 to promote synchronisation by emitting signals on lines 72 and 74. The line 72 is connected to the engine governor and the engine is speeded up, as appropriate, when the gear is changed down. The line 74 is connected to a brake 46 or 48 acting on the transmission in the sense of slowing down the drive gear in the case of an up-change of gear.

There is provision for a mechanical front wheel drive via a shaft 82 coupled to the output shaft 60 by gears 84 and a clutch 86.

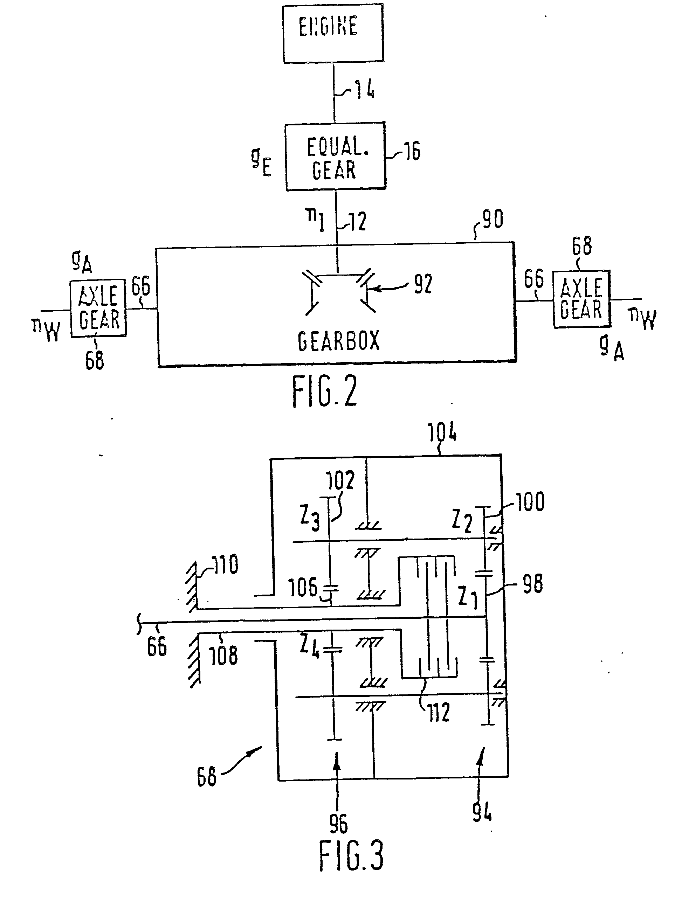

Fig. 2 is a schematic diagram of an alternative embodiment which employs a transverse gearbox 90 with input drive via bevel gears 92. The gearbox 90 may be constructed as described in EP—A—0094464. As shown in Fig. 2 an equalizing gear 16 is incorporated between the engine shaft 14 and the gearbox input shaft 12. Once again it is possible to incorporate the equalizing gear in the gearbox itself, e.g. by suitable adaptation of the bevel gears 92. In any event, the gearbox 10 of Fig. 1 and the gearbox 90 of Fig. 2 is for the most part at least identical from vehicle to vehicle throughout the range of vehicles. Before considering the construction of the axle gears 68 it will be convenient to consider the torque and speed conditions for a range of vehicles and, by way of example, it is assumed that the range extends from a 50 kW vehicle up to a 100 kW vehicle. The following table gives the powers of the vehicles in the range for the cases of 3, 4, 5 and 6 vehicles in the range, assuming in each case that the powers form a geometrical progression.

TABLE I

| 3 | 4 | 5 | 6 |
|---|---|---|---|
| 50 kW | 50 kW | 50 kW | 50 kW |
| 70 kW | 62 kW | 60 kW | 57 kW |
| 100 kW | 80 kW | 70 kW | 66 kW |
| | 100 kW | 84 kW | 75 kW |
| | | 100 kW | 87 kW |
| | | | 100 kW |

For simplicity the case of a range of three vehicles will be considered in what follows. It will be convenient to refer to high power, medium power and low power vehicles and to employ the subscripts H, M and L to denote parameters of these vehicles respectively. The following assumptions are made.

Engine speed (nominal) for all vehicles 2200 rpm.
Vehicle speed (all vehicles) 1.5 to 30 km/h.

Table 2 gives a suitable set of vehicle speeds for the case of an 18-speed gearbox 10 or 90, in km/h and without the engine speed pulled down by a load.

## EP 0 117 945 B1

TABLE 2

| Change Speed Gear \ Range Gear | 1 | 2 | 3 |
|---|---|---|---|
| 1 | 1.5 | 1.95 | 2.54 |
| 2 | 3.15 | 4.10 | 5.33 |
| 3 | 4.94 | 6.43 | 8.36 |
| 4 | 7.02 | 9.13 | 11.87 |
| 5 | 11.17 | 14.52 | 18.87 |
| 6 | 18.65 | 24.25 | 31.50 |

Driven wheel tyre radii:
$$R_H = 0.905 \text{ m}$$
$$R_M = 0.855 \text{ m}$$
$$R_L = 0.770 \text{ m}$$

The speeds of the driven wheels in rpm, for a top speed of 30 km/h, are given by the following equation:

$$n = \frac{30.1000}{2\pi R.60}$$

and we therefore have

$$n_{WH} = 88 \text{ rpm}$$
$$n_{WM} = 93 \text{ rpm}$$
$$n_{WL} = 103 \text{ rpm}$$

where the subscript W denotes wheel speed, as indicated in Figs. 1 and 2.

Application of equation 1 for an engine speed of 2200 rpm shows that the engine torques must be as follows (for powers of 100 kW, 70 kW and 50 kW):

$$T_H = 435 \text{ Nm}$$
$$T_M = 305 \text{ Nm}$$
$$T_L = 218 \text{ Nm}$$

It is further assumed that the gearbox 10 or 90 is designed for an input torque of 340 Nm. Now, a step-up equalizing gear, with an output to input torque gear ratio of less than unity, will reduce torque while a step-down equalizing gear, with an output to input torque gear ratio of more than unity, will increase torque. It can readily be seen that the required equalizing gear ratios $g_E$ are as follows:—

$$1/g_{EH} = 0.78 \quad \text{Gearbox torque} = (435).(0.78) = 340 \text{ Nm}$$
$$1/g_{EM} = 1.11 \quad \text{Gearbox torque} = (305).(1.11) = 340 \text{ Nm}$$
$$1/g_{EL} = 1.56 \quad \text{Gearbox torque} = (218).(1.56) = 340 \text{ Nm}$$

The input speeds (subscript I) to the main gearbox are therefore as follows (the gear ratio being the reciprocal of the torque ratio):

$$n_{IH} = 2200/0.78 = 2820 \text{ rpm}$$
$$n_{IM} = 2200/1.11 = 1982 \text{ rpm}$$
$$n_{IL} = 2200/1.56 = 1410 \text{ rpm}$$

It will further be assumed that the top gear (31.50 ≈ 30 km/h) is equivalent to direct drive. It then follows that the step-down axle gears 68 must have output to input speed ratios $g_A$ as follows:

4

$$g_{AH} = \frac{88}{2820} = 1/32.0$$

$$g_{AM} = \frac{93}{1982} = 1/21.3$$

$$g_{AL} = \frac{103}{1410} = 1/13.6$$

Although a ratio of 1/13.6 can be achieved with a single epicyclic stage, the ratios 1/32 and 1/21.3 require two stages and it is preferred to use two-stage axle gears 68 for all vehicles for unity of design and maximum use of identical parts.

The preferred form of axle drive is shown in Fig. 3 and the reasons why it is preferred will be explained in due course. The illustrated gear is a single epicyclic gear split into first and second stages 94 and 96. The half shaft 66 extending from the differential in the main gearbox 10 or 90 carries the sun wheel 98 with a number of teeth $Z_1$. (No attempt has been made in Fig. 3 to show the relative sizes of the gears.) The first stage sun wheel 98 meshes with the first stage planet wheels 100 which are rotationally fast with second stage planet wheels 102 and are mounted in a common planet carrier 104. The planet carrier forms the output element of the gear and preferably constitutes the hub of a driven wheel. Thus spokes or a wheel disc may be fixed directly to the planet carrier 104 and connect the planet carrier to the wheel rim. The planet wheels 100 and 102 have tooth numbers $Z_2$ and $Z_3$ respectively. The third element of the epicyclic gear is not a conventional annulus but is a sun wheel 106 of the second stage 96 fixed to a support sleeve 108 which is, in turn, fixed to the frame of the vehicle as indicated at 110. The sleeve 108 thus constitutes the mounting for the axle drive 68 and the wheel integral therewith. Moreover, a brake 112 is conveniently accommodated inside the axle drive 68 between the first and second stages 94 and 96. The second stage sun wheel has a tooth number $Z_4$.

The behaviour of an epicyclic gear is described by the equation:

$$n_A = n_c(1 + g) - n_s g \qquad (3)$$

where $n_A$, $n_c$ and $n_S$ are the speeds of the annulus, planet carrier and sun wheel respectively and $g$ is the step down ratio from sun wheel to annulus with the carrier fixed. Here the "annulus" is actually the second sun wheel 106, which is fixed so that $n_A = 0$. From equation (3)

$$n_s g = n_c(1 + g)$$

and

$$\frac{n_c}{n_S} = \frac{g}{1 + g}$$

$n_c/n_S$ corresponds to the axle drive gear ratio $g_A$ derived above and the required values of g are as follows:

$$g_{AH} = 1/32.0 \qquad g_H = 1/31$$
$$g_{AM} = 1/21.3 \qquad g_M = 1/20.3$$
$$g_{AL} = 1/13.6 \qquad g_L = 1/12.6$$

The ratio $g$ for the gear shown in Fig. 3 is readily seen to be given by:

$$g = \frac{Z_1}{Z_2} \cdot \frac{Z_3}{Z_4}$$

There is another constraint in that the algebraic sum of $Z_1$ and $Z_2$ must equal the algebraic sum of $Z_3$ and $Z_4$. It is found possible to achieve values of $g$ very close to the desired $g_H$, $g_M$ and $g_L$ given above with $Z_1$ and $Z_2$ the same in all the axle gears. Specifically if $Z_1 = 13$ and $Z_2 = 65$ the following values can be set up:

$$g_H = \frac{13}{65} \; \frac{15}{93} = \frac{1}{31}$$

$$g_M = \frac{13}{65} \quad \frac{15}{63} = \frac{1}{21} \approx \frac{1}{20.3}$$

$$g_L = \frac{13}{65} \quad \frac{22}{56} = \frac{1}{12.7} \approx \frac{1}{12.6}$$

Note that $(13 + 65) = (15 + 63) = (22 + 56) = (93 - 15)$.

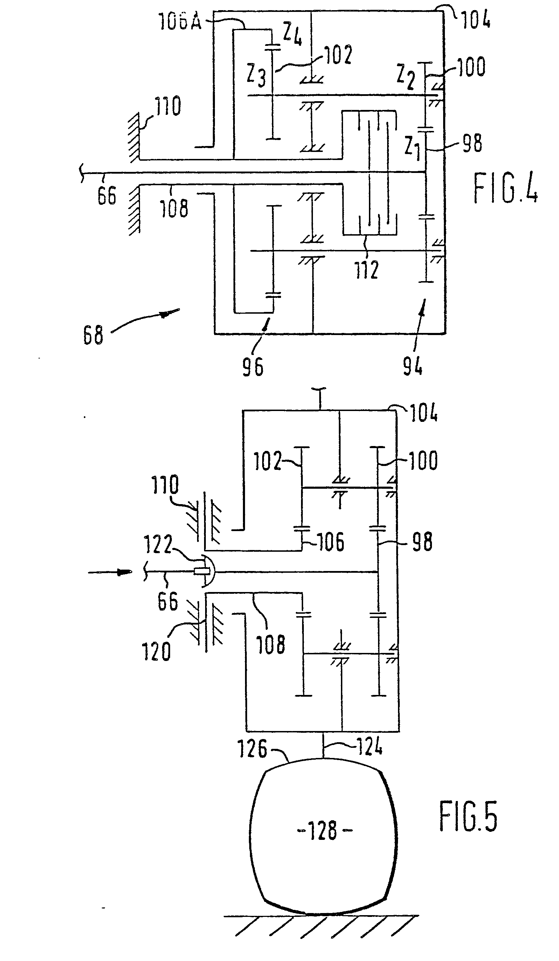

It follows that, in the case of the high power vehicle, the gear with $Z_4$ teeth is no longer a sun wheel 106 as shown in Fig. 3 but must be an annulus 106A as shown in Fig. 4. The axle gear of Fig. 3 employed for the low and medium power vehicles has the planet carrier 104 rotating in the opposite direction to the half shaft 66 but in the gear for the high power vehicle (Fig. 4) the planet carrier 104 rotates in the same direction as the half shaft 66. It is necessary to take account of this by a compensating reversal elsewhere in that the transmission for the high power vehicle, by rearrangement of a bevel gear, as is well known. In the case of Fig. 1, one possibility is to invert the differential 64 laterally. In the case of Fig. 2 the forward and reverse clutches which transmit drive from the bevel gears 92 can become the reverse and forward clutches respectively.

Fig. 5 shows how an axle gear similar to that of Fig. 3, but with the brake 112 omitted, can be applied to a steering axle. The gear of Fig. 4 can be treated in the same way. The supporting sleeve 108 is no longer rigidly fixed to the frame 110 but is attached by a vertical pivot 120. A universal joint 122 is incorporated in the half shaft 66 in line with the pivotal axis. Fig. 5 also shows a wheel disc 124 fixed to the planet carrier 104 and extending out to the wheel rim 126 carrying the tyre 128.

Although the main gearbox 10 is not overloaded because the correct input torque is established by the equalizing gear 16, the axle gears 68 clearly have to be able to handle whatever wheel torque is necessary for the size of the vehicle. Accordingly the axle gears for higher power vehicles are desirably built more strongly than those for lower power vehicles. In particular it is desirable to increase the number of planet wheels 100 and 102 going up the power range. There may be 2, 3, 4 or even 5 planet wheel sets, according to the vehicle power. This principle can be applied also to the alternative axle gears now to be described.

## Claims

1. A range of vehicles having different engine powers and possibly also different driven road wheel diameters, the vehicles having transmissions and final drive reduction units and wherein the final drive reduction units (68) have different ratios compensating for different driven road wheel diameters, characterised in that a given transmission comprises a gearbox (90), which is substantially identical throughout the range driven directly or through an equalizing gear (16) by an engine of a given power such that the input torque to the gearbox is substantially identical throughout the range of vehicles and in that the different ratios of the final drive reduction units (68) are selected additionally to compensate for the different input speeds of the gearbox, thereby to equalize the road speeds throughout the range.

2. A range of vehicles according to Claim 1, characterised in that each final drive reduction unit (68) is a two-stage planetary unit, at least for the higher power vehicles of the range.

3. A range of vehicles according to Claim 2, characterised in that the two stages (94, 96) of the final drive reduction units (68) have planet wheels (100, 102) fixed to rotate together in a common carrier (104) forming a wheel hub, the input stage (94) has a sun wheel (98) driven by the corresponding axle shaft (66) and is of uniform construction, while the output stage (96) has a rotationally fixed sun wheel (106) for a lower power vehicle in the range, and has a rotationally fixed annulus (106A) for a higher power vehicle in the range.

## Patentansprüche

1. Fahrzeugbaureihe mit unterschiedlichen Maschinenleistungen und ggf. auch unterschiedlichen Durchmessern der angetriebenen Laufräder, deren Fahrzeuge Getriebe und Endreduziereinheiten aufweisen und bei denen die Endreduziereinheiten (68) unterschiedliche Verhältnisse zum Kompensieren von unterschiedlichen Durchmessern der Laufräder aufweisen, dadurch gekennzeichnet, daß ein vorgegebenes Getriebe ein Rädergetriebe (90) aufweist, das über die Baureihe hinweg im wesentlichen identisch ist und direkt oder über ein Ausgleichsgetriebe (16) von einer Maschine von vorgegebener Leistung so antreibbar ist, daß das Eingangsdrehmoment für das Rädergetriebe über die Fahrzeugbaureihe im wesentlichen identisch ist, und daß die unterschiedlichen Verhältnisse der Endreduziereinheiten (68) zusätzlich so ausgewählt sind, daß sie Unterschiede bei den Eingangsgeschwindigkeiten für das Rädergetriebe kompensieren, um so die Straßengeschwindigkeit über die Baureihe auszugleichen.

2. Fahrzeugbaureihe nach Anspruch 1, dadurch gekennzeichnet, daß jede Endreduziereinheit (68) eine zweistufige Planetenradeinheit ist, und zwar wenigstens für die Fahrzeuge der Baureihe mit höherer Leistung.

3. Fahrzeugbaureihe nach Anspruch 2, dadurch gekennzeichnet, daß die beiden Stufen (94, 66) der Endreduziereinheiten (68) Planetenräder (100, 102) aufweisen, die so fest angeordnet sind, daß sie in einem gemeinsamen Träger (104), der eine Radnabe bildet, rotieren, wobei die Eingangsstufe (94) ein Sonnenrad (98) aufweist, das durch die korrespondierende Achswelle (66) angetrieben wird und von gleichförmiger Konstruktion ist, während die Ausgangsstufe (96) ein drehmäßig festes Sonnenrad (106) für ein Fahrzeug in der Baureihe von niedrigerer Leistung und einen drehmäßig festen Ring (106A) für ein Fahrzeug in der Baureihe mit höherer Leistung aufweist.

**Revendications**

1. Gamme de véhicules comportant des puissances de moteur différentes et éventuellement également des diamètres de roues entraînées différents, les véhicules comprenant des transmissions et des unités de réduction d'entraînement finales, les unités de réduction d'entraînement finales (68) ayant des rapports différents pour compenser les diamètres de roues entraînées différents, caractérisée en ce qu'une transmission donnée comprend une boîte de vitesses (90), qui est sensiblement identique dans toute la gamme, entraînée directement ou par l'intermédiaire d'un train d'égalisation (16) par un moteur d'une puissance donnée de sorte que le couple d'entrée à la boîte de vitesses est sensiblement identique dans toute la gamme de véhicules, et en ce que les différents rapports des unités de réduction d'entraînement finales (68) sont choisis en outre pour compenser les différentes vitesses d'entrée de la boîte de vitesses, afin d'égaliser les vitesses de roulement dans toute la gamme.

2. Gamme de véhicules suivant la revendication 1, caractérisée en ce que chaque unité de réduction d'entraînement finale (68) est un train planétaire à deux étages, au moins pour les véhicules de plus forte puissance de la gamme.

3. Gamme de véhicules suivant la revendication 2, caractérisée en ce que les deux étages (94, 96) des unités de réduction d'entraînement finales (68) comportent des pignons satellites (100, 102) fixés pour tourner ensemble dans un support commun (104) constituant un moyeu de roue, l'étage d'entrée (94) compend un pignon central (98) entraîné par l'arbre d'essieu correspondant (66) et il est de construction uniforme, tandis que l'étage de sortie (96) comprend un pignon central fixe en rotation (106) dans le cas d'un véhicule de puissance plus faible dans la gamme et il comprend une couronne fixe en rotation (106A) dans le cas d'un véhicule de plus forte puissance dans la gamme.

FIG.1

ENGINE

$-14$

$g_E$ EQUAL. GEAR $-16$

$n_I$ $-12$

$-90$

$g_A$ AXLE GEAR $66$

$68$

$n_W$

$66$ $68$ AXLE GEAR

$n_W$

$g_A$

$92$

GEARBOX

FIG.2

$104$

$102$

$Z_3$ $100$

$Z_2$

$-110$

$106$

$Z_1$ $98$

$66$

$108$ $Z_4$

$112$

$68$

$96$

$94$

FIG.3

FIG.4

FIG.5